## Europäisches Patentamt

## European Patent Office

## Office européen des brevets

(19)

(11) Veröffentlichungsnummer: **0 158 937**
**B1**

(12) # EUROPÄISCHE PATENTSCHRIFT

(45) Veröffentlichungstag der Patentschrift:
**29.03.89**

(51) Int. Cl.⁴: **H 05 B 7/10, F 27 D 11/08**

(21) Anmeldenummer: **85104126.9**

(22) Anmeldetag: **04.04.85**

(54) **Verfahren zur Erzielung eines gleichmässigen Verschleisses der Wände eines Gleichstromlichtbogenofen und Ofen zur Durchführung des Verfahrens.**

(30) Priorität: **16.04.84  SE 8402101**

(43) Veröffentlichungstag der Anmeldung:
**23.10.85 Patentblatt 85/43**

(45) Bekanntmachung des Hinweises auf die Patenterteilung:
**29.03.89 Patentblatt 89/13**

(84) Benannte Vertragsstaaten:
**CH DE FR GB IT LI**

(56) Entgegenhaltungen:
**DE-A-3 423 677**
**GB-A-941 895**
**GB-A-1 016 780**

(73) Patentinhaber: **ASEA AB, S-721 83 Västeras (SE)**

(72) Erfinder: **Stenkvist, Sven- Einar, Dipl.- Ing.,
Ormbergssvängen 10, S-724 62 Västeras (SE)**

(74) Vertreter: **Boecker, Joachim, Dr.- Ing.,
Rathenauplatz 2-8, D-6000 Frankfurt a.M. 1 (DE)**

LIBER, STOCKHOLM 1989

## Beschreibung

Die vorliegende Erfindung betrifft ein Verfahren zur Erzielung eines gleichmäßigen Verschleißes der Wände eines Gleichstromlichtbogenofen sowie einen Gleichstromlichtbogenofen gemäß dem Oberbegriff des Anspruches 2 zur Durchführung des Verfahrens. Ein solcher Ofen ist aus der DE-A-3 423 677.5 bekannt.

Bei einem Gleichstromlichtbogenofen ist man bestrebt, eine gleichmäßige Verteilung der Wärmestrahlung des Lichtbogens auf die Wand des Ofengefäßes zu erreichen, damit der Verschleiß der Ofenwand an aller Stellen gleichmäßig erfolgt. Es wurde versucht, dies dadurch zu erreichen, daß man die Anlage so baut, daß sie mit einem zentral plazierten, vertikal brennenden Lichtbogen arbeitet.

Ferner hat man die als Kathode geschalteten Stromleiter für die Lichtbogenelektrode und für den als Anode geschalteten Bodenkontakt derart angeordnet, daß diese Stromleiter längs der Wände und/oder an den Wänden des Ofengefäßes symmetrisch zueinander verlaufen. Man hat auch mittels Steuermagneten versucht, den Lichtbogen durch magnetische Felder in seiner Lage zu beeinflussen.

Mit diesen an sich wirkungsvollen Maßnahmen läßt sich jedoch nicht in allen Fällen eine gleichmäßige Verteilung des Wandverschleißes erreichen, was u.a. mit der unvermeidlichen Asymmetrie der Ofenform und der unvermeidlichen Asymmetrie bei der Verlegung der Stromleiter zusammenhängt. Man nimmt dabei in Kauf, daß der Wandverschleiß an einigen Stellen des Ofens größer als an anderen Stellen ist. Ein weiteres Problem besteht darin, daß sich schwer vorhersagen läßt, an welchen Stellen der höhere Verschleiß auftreten wird.

Der Erfindung liegt die Aufgabe zugrunde ein Verfahren der eingangs genannten Art nebst Durchführungsanordnung zu entwickeln, bei welchem ein gleichmäßiger Verschleiß der Ofenwand in vollkommenerer Weise erreichbar ist, als mit den bekannten Verfahren.

Zur Lösung dieser Aufgabe wird ein Verfahren gemäß dem Oberbegriff des Anspruches 1 vorgeschlagen, welcher erfindungsgemäß die im kennzeichnenden Teil des Anspruches 1 genannten Merkmale hat.

Ein Gleichstromlichtbogenofen zur Durchführung des Verfahrens weist erfindungsgemäß die im kennzeichnenden Teil des Anspruches 2 genannten Merkmale auf.

Eine vorteilhafte Ausgestaltung des Gleichstromlichtbogenofen gemäß der Erfindung im Anspruch 3 genannt.

Mittels der durch die Erfindung gewonnenen Einstellmöglichkeit kann, nachdem man beispielsweise während des Betriebes einen größeren Verschleiß an einem bestimmten Teil der Ofenwand festgestellt hat, die Lichtbogenelektrode von diesem Teil des Ofens weiter entfernt werden. Eine solche Maßnahme wird zweckmäßigerweise im Zusammenhang mit dem Austausch des Ofengewölbes durchgeführt, wobei auch das Elektrodenloch im Ofengewölbe in geeigneter Weise an eine andere Stelle verlegt wird.

Die Verwendung justierbarer Elektroden bei Wechselstromlichtbogenöfen ist an sich bekannt. Sie dient dort jedoch nur dem Zweck, die Einstellung der Elektrode relativ zu dem vorhandenen Elektrodenloch vorzunehmen. Bei der Erfindung werden sowohl das Elektrodenloch als auch die Elektrode verschoben.

Anhand der in der Figuren soll die Erfindung näher erläutert werden. Es zeigen

Figur 1    eine Seitenansicht eines Gleichstromlichtbogenofens gemäß der Erfindung,

Figur 2    einen vertikalen Querschnitt durch einen ähnlichen Gleichstromlichtbogenofen wie in Figur 1.

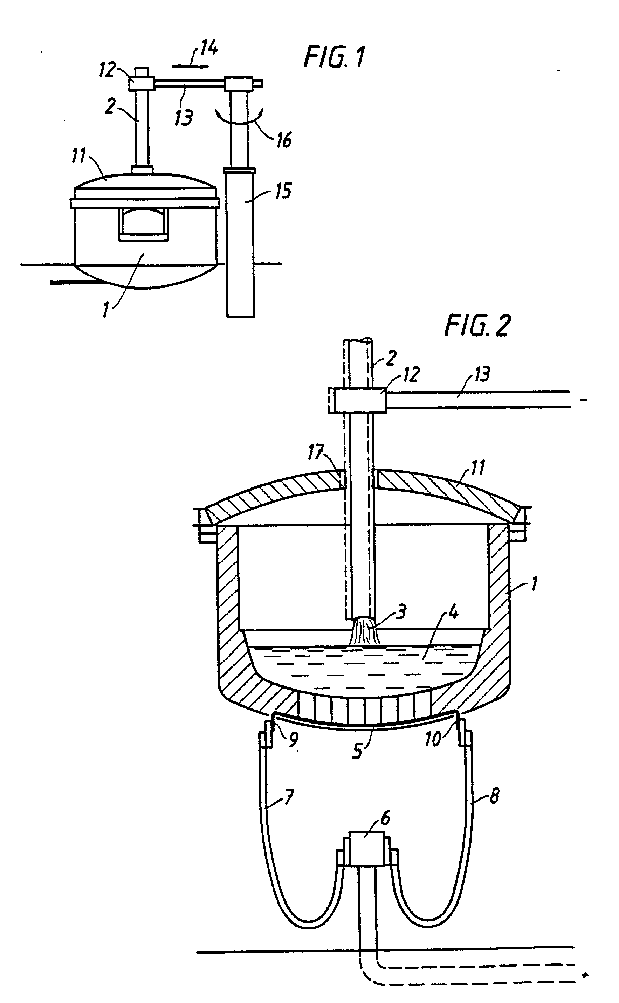

Figur 2 zeigt einen Gleichstromlichtbogenofen mit einer Lichtbogenelektrode 2, die an einem Ofengefäß 1 angeordnet ist und durch das Ofengewölbe 11 hindurchgeführt ist. Am Boden des Ofens ist in üblicher Weise eine Bodenelektrode 5 angeordnet, die mit ihren Anschlußkontakten 9, 10 mittels zweier Hängekabeln 7, 8 an einen als Anode geschalteten Kontakt 6 angeschlossen sind. Zwischen der Lichtbogenelektrode 2 und der Schmelze 4 wird in üblicher Weise ein Lichtbogen 3 erzeugt, und der Erfindung liegt die Aufgabe zugrunde, diesen Lichtbogen dazu zu bringen, im wesentlichen vertikal zu brennen. Es soll also eine Schrägstellung des Lichtbogens und der dadurch bedingte größere Verschleiß an bestimmten Stellen des Ofens vermieden werden. Die Elektrode ist - wie erwähnt - durch das Gewölbe 11 hindurchgeführt und ist in einem Elektrodenhalter 12 angeordnet, der von einem Elektrodenarm 13 getragen wird.

Figur 1 zeigt einen Gleichstromlichtbogenofen nach der Erfindung. Das Ofengefaß ist mit 1 und das Ofengewölbe mit 11 bezeichnet. Die Lichtbogenelektrode 2 ist auch hier durch ein in dem Ofengewölbe 11 befindliches Elektrodenloch geführt und wird von einem an einem Elektrodenarm 13 angeordneten Elektrodenhalter 12 getragen. Gemäß der Erfindung ist der Elektrodearm in Längsrichtung verschiebbar, was durch durch den Doppelpfeil 14 angedeutet ist, sowie um die Tragvorrichtung 15 für den Elektrodearm drehbar, was durch den Doppelpfeil 16 angedeutet ist.

Im Zusammenhang mit einem Austausch des Ofengewölbes oder aus einem anderen Grunde, zum Beispiel wenn man vorher während des Betriebes einen ungleichmäßigen Verschleiß im Ofen festgestellt hat, wird ein neues Gewölbe aufgesetzt, dessen Elektrodenloch eine derart veränderte Lage hat (siehe die gestrichelten Linien 17 in Figur 2), daß dem zuvor aufgetretenen Verschleiß Rechnung getragen wird. Die Verschiebung des Elektrodenloches findet also in einer solchen Richtung statt, daß der Lichtbogen anschließend von der verschlissenen Stelle weiter entfernt brennt und vertikal verläuft. Zugleich wird die Lichtbogenelektrode 2 unter Berücksichtigung des neuen Elektrodenloches 17 im Ofengewölbe 11 und unter Berücksichtigung der gesammelten Betriebserfahrungen mit Hilfe des in Längsrichtung verschiebbaren Elektrodenarms 13 verschoben, wobei evtl. auch eine Drehung in einer Richtung des Doppelpfeils 16 vorgenommen wird, um eine korrekte Lage der Elektrode zu bekommen (gestrichelte Lage in Figur 2). Auf diese Weise kann der Lichtbogen 3 in wirkungsvoller Weise dazu gebracht werden, vertikal zu brennen, so daß ein gleichmäßiger Verschleiß der Wand des Ofengefäßes 1 stattfindet. Auf diese Weise kann die Wärmeverteilung des Ofen getrimmt werden, und eine Justierung vorgenommen werden, welche den im übrigen unvorhersehbaren Verschleiß der Ofengefäßwand in Folge der Lichtbogenschrägstellung berücksichtigt. Mit Hilfe der oben beschriebenen symmetrischen Anordnung der Hängekabeln 7, 8 kann die Symmetrie des Lichtbogens 3 weiter verbessert werden. Auch die Stromleiter für den Elektrodearm, die als Kathode geschaltet sind, können in der oben erwähnt Weise symmetrisch verlegt werden.

Die Erfindung kann im Rahmen des offenbarten allgemeinen Erfindungsgedanken in vielfacher Weise variiert werden.

**Patentansprüche**

1. Verfahren zum gleichmäßigen Verschleiß der Wände eines Gleichstromlichtbogenofens, dadurch gekennzeichnet, daß in gewissen Zeitabständen in Abhängigkeit eines beobachteten Verschleißes die Eintrittsstelle der Lichtbogenelektrode in den Ofen - gegebenenfalls unter Verwendung eines anderen Ofengewölbes derart verschoben wird, daß die zuvor stärker beanspruchten Teile der Ofenwand künftig weniger stark beansprucht werden.

2. Gleichstromlichtbogenofen zur Durchführung des Verfahrens nach Anspruch 1 mit einer durch das Ofengewölbe (11) geführten Lichtbogenelektrode (2) und einer Bodenelektrode oder einem Bodenkontakt (5), wobei die Lichtbogenelektrode (2) von einem Elektrodenarm (13) getragen wird, der seinerseits von einem um eine Vertikalachse (16) drehbaren Elektrodenhalter (12) getragen wird, dadurch gekennzeichnet, daß der Elektrodenarm (13) in horizontaler Längsrichtung (14) verschiebbar ist.

3. Gleichstromlichtbogenofen nach Anspruch 2, dadurch gekennzeichnet, daß das Ofengewölbe austauschbar ist, beispielsweise gegen ein Ofengewölbe, dessen Elektrodenloch im Verhältnis zu dem vorher verwendeten Ofengewölbe verschoben ist.

**Claims**

1. Method to obtain a regular erosion of the walls of a direct current arc furnace, characterized in that in certain time intervals, dependent on discovered erosion, the position of the entrance port for the arcing electrode into the furnace is displaced - possibly by employing a different furnace roof - in such a way that the previously more intensely affected portions of the furnace wall will be less affected in the future.

2. Direct current arc furnace for carrying out the method according to claim 1 with an arcing electrode (2) extending through the furnace roof (11) and with a bottom electrode or a bottom contact (5), the arcing electrode (2) being supported by an electrode arm (13) which for its part is supported by an electrode holder (12), which is rotatably arranged about a vertical axis (16), characterized in that the electrode arm (13) is horizontally displaceable in its longitudinal direction (14).

3. Direct current arc furnace according to claim 2, characterized in that the furnace roof is replaceable, for example by a furnace roof with an electrode hole which is displaced in relation to the electrode hole of the previously employed furnace roof.

**Revendications**

1. Procédé pour assurer une usure uniforme des parois d'un four à arc à courant continu, caractérisé par le fait qu'à des intervalles déterminés et en fonction de l'observation d'une usure, on déplace de telle manière le point d'entrée de l'arc dans le four, éventuellement avec utilisation d'une autre voute de four, que les parties de la paroi du four précédemment sollicitées de façon plus forte, soient ultérieurement moins sollicitées.

2. Four à arc à courant continu pour la mise en oeuvre du procédé selon la revendication 1, comportant une électrode d'arc (2) passant à travers la voute (11) du four, ainsi qu'une électrode de fond ou un contact de fond (5), l'électrode d'arc (2) étant portée par un bras d'électrode (13) qui est porté, à son tour, par un support d'électrode (12) susceptible de tourner autour d'un axe vertical (16), caractérisé par le fait que le bras d'électrode (13) est susceptible d'être déplacé horizontalement dans la direction longitudinale (14).

3. Four à arc à courant continu selon la revendication 2, caractérisé par le fait que la voute du four est susceptible de remplacement, par exemple contre une voute dont le trou de passage pour l'électrode est décalé par rapport à la voute utilisée antérieurement.

FIG. 1

FIG. 2